# EUROPEAN PATENT APPLICATION

(11) **EP 4 692 021 A1**
(43) Date of publication of application: **11.02.2026**
(21) Application number: 24193377.9
(22) Date of filing: 07.08.2024
(51) Int. Cl.: C04B 28/04, C04B 18/167, C04B 7/24, C04B 7/32, C04B 7/47

(54) **ADDITION OF RECYCLED HARDENED CEMENT PASTE TO THE CLINKER COOLER**

(71) Applicant: Heidelberg Materials AG, 69120 Heidelberg (DE)
(72) Inventor: BOLTE, Gerd, 69120 Heidelberg (DE); ZAJAC, Maciej, 69120 Heidelberg (DE); SKOCEK, Jan, 69120 Heidelberg (DE)
(74) Representative: Zellentin & Partner mbB Patentanwälte

(57) **Abstract**

Method for manufacturing cement clinker comprising the steps of sintering a raw meal in a kiln to provide a raw cement clinker, passing the raw cement clinker into a cooler, adding recycled concrete paste/recycled concrete fines (RCP/RCF) from waste concrete to the raw cement clinker in the cooler, and withdrawing a cooled cement clinker from the cooler having an increased amount of clinker phases compared to the raw cement clinker, wherein the amount and point of addition of the RCP/RCF is/are adjusted so that it/they is/are heated to a temperature in the range from 650 to 1110 °C by contacting the raw cement clinker, as well as method for recycling concrete waste comprising the steps of separating RCP/RCF from waste concrete and manufacturing a cement clinker with an addition of the RCP/RCF to the cooler.

## Description

The present invention relates to a method for recycling the fine parts of concrete demolition waste and other waste concrete as well as a method for manufacturing cement clinker with reduced CO₂ emission.

Cement industry is looking to reduce the CO₂ footprint. The calcination of CaCO₃ with fossil fuels to produce cement clinker is the cause of these emissions. One measure to reduce the CO₂ footprint is to replace clinker with supplementary cementitious materials (abbreviated SCM) and/or limestone, i.e., making composite cements. Common SCM are granulated blast-furnace slag (abbreviated GBFS), fly ash, and natural pozzolana. Some natural pozzolana like clay require a calcination to be suitable as SCM. In recent years calcined clays have come into focus as SCM due to an increase in demand and a stagnating, even decreasing availability of GBFS and fly ash. In dependency of mineral composition, an effective temperature from 700°C to 900°C is necessary to activate clay. Furthermore, fines from concrete demolition waste processing are appearing as potential SCM, either used directly or after valorization.

Closing the loop and reusing valuable raw materials such as recycled concrete aggregates and pastes are very desirable goals. It is known to divide concrete demolition waste into recycled concrete aggregate (abbreviated RCA), recycled concrete fines (abbreviated RCF), and recycled concrete paste (abbreviated RCP) for reusing. RCP and RCF can, for example, be used as a minor component (up to 5 wt.-%) in standard cements. Tests revealed that it is possible to use up to 20 wt.-% without any significant loss of performance. A new standard EN 197-6:2023 has been prepared, specifying the requirements for cement with recycled concrete fines whose intended use is the preparation of, e.g., concrete or mortar. Use of RCF is foreseen in amounts of up to 35 wt.-% in the newly regulated standard cements.

RCP and RCF contain mainly quartz (or other minerals being the fine parts of the aggregate), calcium hydroxide, calcite, calcium silicate hydrates (abbreviated C-S-H), calcium aluminate silicate hydrates (abbreviated C-A-S-H), and calcium aluminate hydrates (AFm, AFt). The hydrates C-S-H, C-A-S-H, AFm, and AFt can be activated to highly reactive products by the so-called enforced carbonation. Therein, calcium carbonate and hydraulically reactive silica gel and alumina-silica gel are formed. Activation by enforced carbonation has the advantage of also binding CO₂. However, enforced carbonation requires additional devices and/or an adaptation of the cement manufacturing. It is not always easy or possible to obtain a desired carbonation degree without considerable energy input and/or effort.

Several proposals for optimization are found in the prior art. For example, WO 2023/203216 A1 describes a synergistic effect of heating and carbonating waste concrete, temperatures from 250 to 800 °C are mentioned as possible while 300 to 600 °C are preferred. The heating is preferably achieved by transfer from hot gas, mixing with hot clinker is mentioned as option but no details are provided. The obtained product is stated to be a pozzolan. It is further known from EP 2 786 973 A1, EP 3 070 064 A1, and EP 4 194 417 A1 to add materials to the clinker cooler for activation. Again, the products are described as SCM and none of the three documents considers waste concrete as added material. EP 2 786 973 A1 aims at burning off organic matter, EP 3 070 064 A1 focuses on calcining natural pozzolans (although fly ash and waste are mentioned), and EP 4 194 417 A1 activates zeolites.

Consequently, the object to reduce CO₂ footprint of cement manufacturing is not fully solved and improved processes are continuously sought for.

Surprisingly, it was now found that RCP and RCF can be incorporated into cement clinker when they are added to the clinker cooler. That requires only minimal changes to the process and devices of cement manufacturing. Unlike enforced carbonation it is no problem when the activation remains incomplete.

Thus, the present invention achieves the above-mentioned object by a method for manufacturing cement clinker comprising the steps:
- sintering a raw meal in a kiln to provide a raw cement clinker,
- passing the raw cement clinker into a cooler,
- adding RCP and/or RCF to the raw cement clinker in the cooler, and
- withdrawing a cooled cement clinker from the cooler having an increased amount of clinker phases compared to the raw cement clinker,
wherein the amount and point of addition of the RCP and/or RCF is/are adjusted so that it/they is/are heated to a temperature in the range from 650 to 1110 °C by contacting the raw cement clinker. The problem is also solved by a method for recycling concrete waste, comprising the steps of:
- separating RCP and/or RCF from waste concrete
- passing RCP and/or RCF into a cooler for a raw cement clinker, wherein the amount and point of addition of the RCP and/or RCF is/are adjusted so that it/they is/are heated to a temperature in the range from 650 to 1110 °C by contacting the raw cement clinker in the cooler, and
- withdrawing from the cooler a cooled cement clinker with an increased amount of clinker phases compared to the raw cement clinker.

The dehydration of hydrated cement takes place at comparatively low temperatures, starting from 650 °C, see e.g. S. Zhutovsky and A. Shishkin, "Recycling of hydrated Portland cement paste into new clinker", Constr. and Build. Materials, 280 (2021), 122510. Such temperatures are achieved in the cooler through the contact of the RCP and/or RCF with the raw cement clinker that has been passed from a kiln into the cooler.

To simplify the description, the following abbreviations that are usual in the field of cement are used herein: H - H₂O, C - CaO, A - Al₂O₃, F - Fe₂O₃, M - MgO, N - Na₂O, K - K₂O, S - SiO₂ and $ - SO₃. Compounds are mostly named by the pure form, without explicit mentioning of solid solutions, foreign ion substitution and impurities etc. as are usual in technical and industrial materials. As one of ordinary skill in the art knows, the exact composition of the phases described may vary due to substitution with foreign ions. Such compounds are comprised when mentioning the pure form herein unless it is expressly stated otherwise.

The term "reactive" shall mean a hydraulic reactivity unless specified otherwise. Hydraulic reactivity designates the reaction of a compound with water or other water-containing compounds to form hydrated phases including a reaction of two or more compounds occurring simultaneously.

Herein, clinker designates a sinter product obtained by burning a raw material at elevated temperature and containing at least one hydraulic phase. Burning means a change of one or more properties of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or act as fluxes and/or enhance clinker formation e.g., by forming solid solutions or stabilization of phases. Mineralizers can be part of the starting material components or be added as separate component.

Cement designates a material that, after mixing with an aqueous liquid to form a paste, is able to develop mechanical strength by hydraulic reaction. Thus, cement mostly denotes a clinker ground with or without further components, but also mixtures like super sulfated cement, alkali activated binder, and hydraulic materials not obtained by sintering like a dicalcium silicate obtained by hydrothermal treatment. Composite cement means a mixture containing cement and a supplementary cementitious material. A cement or composite cement is usually used adding water or another liquid and mostly also aggregate. Typically, admixtures and/or additives are added to the cement and/or the paste.

A supplementary cementitious material (abbreviated SCM) is defined as a pozzolanic and/or latent hydraulic material useful to replace a part of the clinker in a binder. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like oxide, sulfate, hydroxide, or other salts of alkaline or alkaline earth metals and/or products of the hydraulic reaction of the ground clinker, e.g., calcium silicates liberate calcium hydroxide during hardening. Pozzolanic materials are characterized by a content of reactive silica and/or alumina which form strength-providing calcium silicate hydrates and calcium aluminate hydrates, respectively, during hydration of the clinker together with the calcium hydroxides liberated. In practice, the limit between latent hydraulic and pozzolanic materials is not well defined, for example, fly ashes can be both latent hydraulic and pozzolanic, depending on their calcium oxide content. Consequently, the term SCM designates both latent hydraulic as well as pozzolanic materials. However, not reactive or only slightly reactive materials like limestone that substantially do not take part in the hydraulic reactivity have to be clearly differentiated from SCM, with which they are sometimes summarized as mineral additions.

Hydraulically hardening building material means a wet mixture that is able to harden hydraulically and comprises a cement or composite cement as well as optionally any other addition contained to adjust the properties like final strength, workability of the wet mixture and strength development properties, to the intended use of the building material. For example, a concrete used to build a bridge needs other properties than a screed for casting a floor or a mortar for laying bricks.

Building structure denotes the hardened building material, e.g., a precast concrete element or a floor or a bridge part from cast-in-place concrete.

According to the present invention, waste concrete obtained as known per se is used as source of RCP and/or RCF. Waste concrete covers all materials that occur in the use of cement and hydraulically hardening building materials. One typical example is concrete demolition waste. Further examples are remains from hydraulically hardening building materials, like concrete and mortar prepared and then superfluous, i.e., discarded paste; and solid parts in the wastewater from cleaning devices for concreting, like devices for mixing concrete e.g., concrete trucks and mortar mixers, and tools for placing concrete, e.g., molds for precast concrete parts. Thus, while the material is designated waste concrete, the hydraulically hardening building material from which it derives can also be any other building material comprising hydraulic cement like mortar, floor screed, etc.

A preferred waste concrete is concrete demolition waste. Concrete demolition waste designates the crushed material obtained during demolition of structures made from hydraulically hardening building materials, especially from concrete, like buildings and road surfaces from which the foreign materials like wood, metal parts, brick parts, and plastic have been substantially completely removed before and/or after crushing. Typically, concrete demolition waste is ground and sieved/classified to separate the coarse fraction comprising the aggregate as RCA from the fine fraction comprising RCP and fine aggregate as well as comminuted aggregate particles as RCF. RCP can be separated from the fine fraction RCF if desired. RCF usually has a particle size distribution with a D₉₀ ≤ 4.0 mm, preferably a D₉₀ ≤ 2.0 mm, most preferred a D₉₀ ≤ 1.0 mm. RCP typically has a D₉₀ ≤ 1.0 mm, preferably a D₉₀ ≤ 0.5 mm, most preferred a D₉₀ ≤ 0.1 mm. The RCA fraction normally has a D₁₀ ≥ 0.1 mm, preferably a D₁₀ ≥ 1.0 mm, most preferred a D₁₀ ≥ 2.0 mm. The exact composition and particle size distributions of the RCA and RCF and RCP depend on the original binder and composition used in the hydraulically hardening building material and on the demolishing and grinding procedures applied. Usually, the original aggregate is separated as much as possible and the RCF contain mostly the ground hardened binder paste RCP together with fine aggregates/sand. Typically, RCP is present in amounts of 30 to 80 wt.-% of the total RCF weight, preferably in amounts ≥ 40 wt.-% or ≥ 50 wt.-% of the RCF.

The separation of RCP/RCF from the aggregate is mostly achieved by a separation according to size, e.g., sieving, classifying, filtering, or by centrifugation. Detaching RCP from the aggregate can be enhanced by simultaneous application of attrition forces and carbonation as described, e.g., in US 2015/0210594 A1, US 2016/0046532 A1, and EP 3 744 700 A1, and/or by electric pulse fragmentation techniques as described in EP 4 124 609 A1.

It is also possible to use the solid parts in the waste washing water from cleaning concrete mixing devices and tools for placing concrete as well as discarded paste as waste concrete. Here, separation of RCP/RCF may comprise concentrating an aqueous suspension, e.g., by filtering or decantation. The exact distribution and composition of the RCP/RCF depends on the waste and the conditions used in the treatment.

The RCP and/or RCF for addition to the clinker cooler can be provided from one waste concrete or by mixing and/or co-grinding or co-crushing several waste concrete materials. Typically, it is easier to use only one source, but using two or more allows optimization of the composition. In one embodiment, only one waste concrete is used.

The cooler is part of a known cement plant that is also operated in the known manner. Thus, as a rule, raw materials are provided, ground, and mixed in the determined amounts to form a raw meal. The raw meal is preheated, usually in a cyclone preheater, and in many cases also pre-calcined. The preheated and optionally pre-calcined raw meal then enters the kiln, normally a rotary kiln. If no or only some pre-calcination took place, the pre-calcination occurs in the first part of the kiln. Upon moving forward in the kiln, the raw meal is sintered to form a raw cement clinker, typically in the form of granules. The raw cement clinker leaves the kiln and enters the cooler, which is usually directly attached to the kiln. In the cooler, the raw cement clinker is cooled by a countercurrent of gas, normally air, before the cooled clinker leaves the cooler.

According to the present invention, RCP and/or RCF is/are added to the cooler. The amount and point of addition are adjusted so that the added RCP and/or RCF is heated to a temperature from 650 to 1110 °C, preferably from 700 to 900 °C, by contact with the raw clinker. By this contact, the hardened cement paste containing the RCP and/or RCF is heated by the raw cement clinker and at least a part of it forms new phases like belite, free lime, rankinite, amorphous calcium-alumina-silicates, anhydrate, calcium aluminates. These phases may become an integral part of the clinker, but this is not necessary. Important is the formation of the new clinker phases that can also remain partially or completely separated from the raw clinker formed in the kiln. Typically, the new phases sinter at least partially together with the raw clinker granules. As a result of the method according to the invention, the amount of clinker phases in the cooled clinker withdrawn from the cooler is higher than the amount of clinker phases in the raw clinker that had entered the cooler. Typically, 30 wt.-% or more, preferably 50 wt.-% or more, most preferred 70 wt.-% or more of the RCF and/or RCP added to the clinker cooler are converted into new phases. Thus, when for example 30 wt.-% or 20 wt.-% or 10 wt.-% RCF and/or RCP with respect to the raw cement clinker weight are added to the cooler, the addition to the clinker weight is up to 21 wt.-% or 14 wt.-% or 7 wt.-% of the raw clinker weight (based on a 70 wt.-% conversion rate). The amount of converted RCF and/or RCP depends on the temperature of the raw clinker at the point of addition and the contact time as well as on the composition of the added RCF and/or RCP. RCP is typically converted to a high degree, e.g., up to 70 wt.-% or 90 wt.-% or even (almost) 100 wt.-% of the hardened paste is converted. RCF can and often do contain phases being inert even at the highest temperature found in the cooler. Particularly quartz from fine aggregate and abraded parts of the coarse aggregate remains mostly unconverted. Thus, the conversion degree of RCF is usually lower, e.g., up to 30 wt.-% or 50 wt.-% of the added RCF. Preferred amounts of RCF and/or RCP added to the raw clinker in the cooler range from 5 to 40 wt.-%, most preferred from 10 to 30 wt.-%, of the raw clinker weight.

The cement clinker made is usually Portland cement clinker, calcium aluminate clinker, or calcium sulfoaluminate clinker. Preferably, it is Portland cement clinker.

One advantage in comparison to other materials that could be added to the cooler is that the moisture content of the RCP and RCF is low and therefore also the input of water vapor into the kiln system. RCP/RCF are already fine, dry, and easy to dose, which enables easy temperature transfer and often results in a complete conversion. Optimal control of the annealing step can be difficult to achieve in existing clinker coolers. But even if the conversion is not complete, no negative effects on the cement and concrete performance are expected. Unprocessed RCP and RCF are suitable components of cement and concrete, acting as inert filler and allowed by the applicable standards like EN 197-1:2011 and EN 197-6:2023. In contrast, partially annealed reactive materials like clay impair the fresh properties of cement and concrete, their strength development as well as the durability of the hardened building element (shrinkage). Thus, a complete conversion of the added RCP and/or RCF is not necessary, but often more than 30 wt.-% or 50 wt.-% or 70 wt.-% are converted.

It is an advantage that the RCP/RCF added to the cooler is not limiting the possibility of adding minor components in amounts of up to 5 wt.-%, for example, cement kiln dust, by-pass dust, raw meal, or limestone, under the applicable standards.

The cement clinker withdrawn from the cooler is processed as known per se. Typically, it is ground with or without further materials to a cement. Usually, cement has a D₉₀ ≤ 90 µm, preferably ≤ 60 µm and/or a slope n from 0.6 to 1.4, preferably from 0.7 to 1.2, determined by laser granulometry and calculated by the Rosin-Rammler model. Particle sizes are determined here by laser granulometry with a MasterSizer (Malvern Panalytical Ltd., GB) according to the Fraunhofer theory, in isopropanol dispersion, wherein D₉₀ (or D₅₀, D₁₀, ...) values are volume based. Common further materials added to the cement are e.g., sulfate carriers, SCM, and fillers. Grinding takes place in a manner and in devices known per se. Grinding aids can be added. Useful are for example but not limited to alkanolamines like monoethanolamine, diglycolamine, diethanolamine, diisopropanolamine, methyldiethanolamine, triethanolamine, triisopropanolamine, and diethanol-isopropanolamine.

The cement obtained or a hydraulic building material made with it like concrete can comprise admixtures and/or additives. Usual are, for example but not limited to, admixtures like retarders, dispersants, defoaming agents, air-entraining agents, water reducing agents, superplasticizers, and/or additives like pigments, fibers, and any mixture of two or more of the mentioned admixtures and additives. If admixtures and/or additives are added, they are used in the amounts known per se and adjusted according to need as usual.

Cements made from the clinker obtained by the method according to the invention can be used for all applications where known cements are used. Possible applications are, for example but not limited to, ready mix concrete, cast-in-place concrete, repair mortar, precast concrete, earth-dry concrete, self-levelling floor screed, and shotcrete application.

Typically, the cement will be mixed with water and aggregate for use. A water/cement-ratio (w/c) of 0.6 or lower is often suitable, whereas the usual w/c ranges from 0.4 to 0.6, except for applications such as screed and earth-dry concrete, needing higher or lower w/c, respectively.

In one embodiment, a calcium sulfate source like gypsum, calcium sulfate with variable and unknown crystal water content, flue-gas desulfurization gypsum, recycled gypsum boards, recycled anhydrite from floor screeds, and other waste or by-products with at least 50 wt.-% CaSO₄ content, is added to the clinker cooler together with or downstream of the RCP/RCF addition. Thereby, any moisture and crystal water are reliably removed, and organic impurities are burnt/pyrolyzed. As a result, anhydrite is obtained as well-defined sulfate carrier, already blended with the cement clinker. The calcium sulfate source is added to the clinker in the cooler, wherein the amount and point of addition of the calcium sulfate source to the clinker are adjusted so that the calcium sulfate source is heated to a temperature in the range from 200 to 900 °C, usually from 200 to 450 °C, by contacting the clinker. The amount of calcium sulfate in the calcium sulfate source is ≥ 50 wt.-%, preferably ≥ 65 wt.-%, most preferred ≥ 85 wt.-%. When organic matter is present as contaminant in the calcium sulfate source, a slightly reducing atmosphere is generated at relatively low temperatures, linked to the burning/pyrolysis of the organic matter. This may also help to convert/reduce a fraction of water-soluble hexavalent chromium to less soluble oxidation states. Thereby, the demand for chromate reducers according to Annex XVII Paragraph 47 of Regulation (EC) 1907/2006 (REACH) may be reduced.

An addition of a sulfate source to the cooler is specifically beneficial when calcium sulfoaluminate cement clinkers are made. The composition of calcium sulfoaluminate cement clinkers is very variable, but all types have in common that ye'elimite is a key hydraulic phase. In addition, they can contain variable amounts of phases such as belite, brownmillerite, ferrite, ternesite, calcium aluminate, alite and others. Calcium sulfoaluminate cements usually contain more sulfate than Portland cement and are sensitive to even small amounts of hemihydrate. Providing the needed sulfate by adding a sulfate source to the cooler solves this problem. The presence of organic impurities in an added sulfate source and the resulting slightly reducing atmosphere advantageously prevent, or at least substantially diminish, a decomposition of sulfate bearing phases like ye'elimite and anhydrite during cooling, so that adding sulfate sources containing organic impurities to the cooler is especially advantageous for making calcium sulfoaluminate cement clinkers. Further details can be found in co-filed application EP24193374.6

The invention will be illustrated further with reference to the examples that follow, without restricting the scope to the specific embodiments described. The invention includes all combinations of described and especially of preferred features that do not exclude each other. If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition and is only present in trace amounts or as an impurity. As used herein, unless indicated otherwise, the term "free from" means that a composition does not comprise a particular material, i.e., the composition comprises 0 weight percent of such material.

### Example 1

To test the effect of adding RCF to the clinker cooler, collected fines from concrete recycling (fraction < 2 mm) were dried at a temperature of 105°C (comparison sample RCF105) and afterwards placed in a thin layer in a crucible. The crucible was placed in a pre-heated oven at the targeted temperature for 10 minutes. The crucible was then removed from the oven and cooled down in air to 20 °C. The obtained material was afterwards ground to a D₉₀ between 40 µm and 50 µm. Table 1 shows the target annealing temperatures used for the samples.

**Table 1: overview of samples**

| Sample | Target temperature |
|---|---|
| RCF105 | 105 °C (comparison without annealing) |
| RCF600 | 600 °C (comparison with annealing) |
| RCF700 | 700 °C (according to the invention) |
| RCF800 | 800 °C (according to the invention) |
| RCF900 | 900 °C (according to the invention) |

The chemical and mineralogical composition of the materials was determined by XRF and XRD analysis. Table 2 lists the chemical compositions of the used materials, determined by XRF analysis. Table 3 lists the mineralogical compositions of the used materials, determined by XRD analysis. The density and the BET (Brunauer-Emmett-Teller) area measured for the samples are also presented in table 3.

**Table 2: chemical composition in wt.-%**

| | RCF105 | RCF600 | RCF700 | RCF800 | RCF900 |
|---|---|---|---|---|---|
| LOI 1050 °C | 8.68 | 6.00 | 4.97 | 3.75 | 1.37 |
| SiO₂ | 67.11 | 69.18 | 70.48 | 70.91 | 73.11 |
| Al₂O₃ | 5.06 | 5.22 | 5.19 | 5.35 | 5.5 |
| TiO₂ | 0.17 | 0.18 | 0.18 | 0.18 | 0.20 |
| MnO | 0.05 | 0.05 | 0.06 | 0.05 | 0.05 |
| Fe₂O₃ | 1.95 | 1.74 | 1.83 | 1.84 | 1.88 |
| CaO | 12.12 | 12.73 | 12.49 | 12.74 | 13.3 |
| MgO | 0.79 | 0.82 | 0.82 | 0.84 | 0.87 |
| K₂O | 1.41 | 1.47 | 1.46 | 1.51 | 1.53 |
| Na₂O | 0.55 | 0.59 | 0.58 | 0.59 | 0.60 |
| SO₃ | 0.80 | 0.80 | 0.80 | 0.79 | 0.58 |
| P₂O₅ | 0.07 | 0.07 | 0.07 | 0.07 | 0.07 |
| total XRF | 98.73 | 98.85 | 98.93 | 98.59 | 99.05 |

As can be seen in table 2, with increasing annealing temperature, the LOI (loss on ignition upon heating until constant mass at 1050 °C) is decreasing. LOI is believed to be mostly due to the dehydration of hydrated cement in the RCF. Thus, its decrease indicates conversion and the formation of additional clinker phases. Measuring the amount of added clinker phases is challenging, even for the simulation samples made in the laboratory. The added and the newly formed phases are poorly crystalline, impairing accuracy of the quantitative XRD analysis. Differentiating between the poorly crystalline phases formed and those already found in the added RCF and/or RCP will likely be almost impossible in industrial products. Both the clinker composition and the composition of the added RCF and/or RCP vary too much for a straightforward measurement.

**Table 3: mineralogical composition in wt.-%, BET area, and density**

| | RCF105 | RCF600 | RCF700 | RCF800 | RCF900 |
|---|---|---|---|---|---|
| C₂S | | | | 3.4 | 5.7 |
| C₄AF | 0.4 | 0.4 | | | |
| Mayenite | | | | | 0.7 |
| Free lime | | | | | 2.0 |
| Anhydrite | | | | 1.0 | 1.3 |
| Quartz | 60.7 | 64.2 | 64.3 | 60.1 | 64.9 |
| Calcite | 8.9 | 8.6 | 8.1 | 7.5 | 1.4 |
| Akermanite | | | | | 1.8 |
| Monocarboaluminate | 0.7 | | | | |
| Katoite with SiO₄ | | | | | 0.3 |
| Albite | 4.4 | 4.3 | 6.6 | 4.9 | 4.5 |
| Orthoclase | 4.5 | 5.4 | 4.7 | 5.0 | 4.6 |
| Microcline max | 4.8 | 3.0 | 3.8 | 3.8 | 4.2 |
| Augite | | | | 1.2 | 1.4 |
| Hornblende_Mg_Fe | | 1.0 | | 0.6 | |
| Muscovite-1M | 1.1 | 1.6 | 0.7 | 1.2 | 1.0 |
| Illite | 1.9 | 1.5 | 2.1 | 0.9 | 0.6 |
| Clinochlore | 0.6 | 0.6 | 0.3 | | |
| Kaolinite | 0.6 | | | | |
| X-ray Amorphous | 11.3 | 9.6 | 9.5 | 10.3 | 5.4 |
| BET area [m²/g] | 7.1 | 6.7 | 6.0 | 3.5 | 2.7 |
| density [g/cm³] | 2.59 | 2.62 | 2.66 | 2.72 | 2.72 |

As can be seen from table 3, at 800 °C, the calcite started to decompose and belite (C₂S) formed in the used RCF. Quartz remained inert even at 900 °C. At 900 °C, the belite amount further increased and additionally mayenite, free lime, and more anhydrite formed. Also, table 3 illustrates the reduction of surface area (BET) and increase of density with increasing annealing temperature. The surface area reduction can be attributed to a modification of the X-ray amorphous phase.

### Example 2

Composite cements were made from the samples obtained in example 1 using a CEM I 52.5 N as base cement. For each composite cement, 7 wt.-% of the respective sample were blended with the cement, and the compressive strength according to DIN EN 196-1:2016 and the consistency at different ages of a mortar following DIN EN 413-2:2016 were measured. As a reference, the strength and consistency were also measured for the CEM I 52.5 N without replacement. The results are listed in table 4.

**Table 4: properties of composite cements with 7 wt.-% replacement**

| | CEM I 52.5 N | RCF105 | RCF600 | RCF700 | RCF800 | RCF900 |
|---|---|---|---|---|---|---|
| Mortar spread after | | | | | | |
| 0 minutes | 194 mm | 193 mm | 193 mm | 193 mm | 195 mm | 197 mm |
| 30 minutes | 186 mm | 189 mm | 186 mm | 185 mm | 185 mm | 185 mm |
| 60 minutes | 180 mm | 184 mm | 183 mm | 180 mm | 183 mm | 184 mm |
| 90 minutes | 174 mm | 182 mm | 180 mm | 180 mm | 181 mm | 180 mm |
| 120 minutes | 169 mm | 181 mm | 178 mm | 173 mm | 175 mm | 175 mm |

| Compressive strength in MPa after | | | | | | |
|---|---|---|---|---|---|---|
| 1 day | 12.8 | 12.3 | 12.6 | 12.3 | 13.2 | 12.8 |
| 2 days | 27.2 | 24.1 | 26.1 | 27.7 | 26.7 | 25.0 |
| 7 days | 51.0 | 43.7 | 46.8 | 48.6 | 47.7 | 45.5 |
| 28 days | 65.5 | 55.2 | 56.8 | 62.6 | 60.0 | 57.6 |

| Relative compressive strength after | | | | | | |
|---|---|---|---|---|---|---|
| 1 day | 100 % | 96 % | 98 % | 96 % | 103 % | 100 % |
| 2 days | 100 % | 89 % | 96 % | 102 % | 98 % | 92 % |
| 7 days | 100 % | 86 % | 92 % | 95 % | 94 % | 89 % |
| 28 days | 100 % | 84 % | 87 % | 96 % | 92 % | 88 % |

Table 4 illustrates that even if the conversion is not complete, no negative effects on the cement performance were detected. The method and use according to the invention provide higher compressive strength compared to the simple use of the dried RCF (RCF105) as described in EN 197-6:2023. Also, the comparison composite cement with RCF heated to 600 °C (RCF600) showed lower strengths at 28 days.

### Example 3

Further composite cements were made with 25 wt.-% of the samples and a base cement CEM 142.5 R. The compressive strengths measured are listed in table 5.

**Table 5: properties of composite cements with 25 wt.-% replacement**

| | CEM I 42.5 R | RCF105 | RCF600 | RCF700 | RCF800 | RCF900 |
|---|---|---|---|---|---|---|
| Compressive strength in MPa after | | | | | | |
| 1 day | 22.1 | 14.9 | 14.6 | 15.2 | 14.5 | 15.3 |
| 2 days | 35.9 | 25.7 | 25.7 | 26.8 | 25.4 | 26.1 |
| 7 days | 50.4 | 38.9 | 40.6 | 41.6 | 40.7 | 41.3 |
| 28 days | 63.6 | 46.7 | 46.6 | 49.4 | 48.0 | 51.8 |

| Relative compressive strength after | | | | | | |
|---|---|---|---|---|---|---|
| 1 day | 100 % | 67 % | 66 % | 69 % | 66 % | 69 % |
| 2 days | 100 % | 72 % | 72 % | 75 % | 71 % | 73 % |
| 7 days | 100 % | 77 % | 81 % | 83 % | 81 % | 82 % |
| 28 days | 100 % | 73 % | 73 % | 78 % | 75 % | 81 % |

The results in table 5 confirm that a high conversion degree is not needed. Again, the RCF only dried (RCF105) and the RCF annealed at 600 °C (RCF600), i.e., below the temperature aimed at according to the present invention, showed lower strengths at 28 days. It should be noted that the compressive strength measured for the base cement without replacement indicates that it is actually a CEM I 52.5 R according to EN 197-1:2011 contrary to its original designation as CEM 142.5 R. However, this fact is irrelevant for the shown comparative analysis.

## Claims

1. Method for manufacturing cement clinker comprising the steps:
- sintering a raw meal in a kiln to provide a raw cement clinker,
- passing the raw cement clinker into a cooler,
- adding recycled concrete paste and/or recycled concrete fines from waste concrete to the raw cement clinker in the cooler, and
- withdrawing a cooled cement clinker from the cooler having an increased amount of clinker phases compared to the raw cement clinker,
wherein the amount and point of addition of the recycled concrete paste and/or recycled concrete fines is/are adjusted so that it/they is/are heated to a temperature in the range from 650 to 1110 °C by contacting the raw cement clinker.

2. Method for recycling concrete waste, comprising the steps of:
- separating recycled concrete paste and/or recycled concrete fines from waste concrete,
- passing recycled concrete paste and/or recycled concrete fines into a cooler for a raw cement clinker, wherein the amount and point of addition of the recycled concrete paste and/or recycled concrete fines is/are adjusted so that it/they is/are heated to a temperature in the range from 650 to 1110 °C by contacting the raw cement clinker in the cooler, and
- withdrawing from the cooler a cooled cement clinker with an increased amount of clinker phases compared to the raw cement clinker.

3. Method according to claim 1 or 2, wherein the cement clinker is Portland cement clinker, calcium aluminate cement clinker, or calcium sulfoaluminate cement clinker, preferably Portland cement clinker.

4. Method according to anyone of claims 1 to 3, wherein the waste concrete is one or more of concrete demolition waste, solid parts in the wastewater from cleaning concrete mixing devices and tools for placing concrete, and discarded paste.

5. Method according to anyone of claims 1 to 4, wherein the recycled concrete paste contains ≥ 30 wt.-% or ≥ 40 wt.-% or ≥ 50 wt.-% hardened cement paste and/or has a particle size distribution with a D₉₀ ≤ 1.0 mm, preferably a D₉₀ ≤ 0.5 mm, most preferred a D₉₀ ≤ 0.1 mm.

6. Method according to anyone of claims 1 to 5, wherein the recycled concrete fines have a particle size distribution with a D₉₀ ≤ 4 mm, preferably a D₉₀ ≤ 2 mm, most preferred a D₉₀ ≤ 1 mm.

7. Method according to anyone of claims 1 to 6, wherein the added recycled concrete paste and/or recycled concrete fines is/are heated to a temperature from 700 to 900 °C by contact with the raw clinker in the cooler.

8. Method according to anyone of claims 1 to 7, wherein the amount of recycled concrete paste and/or recycled concrete fines added to the clinker ranges from 5 to 40 wt.-%, preferably from 10 to 30 wt.-%.

9. Method according to anyone of claims 1 to 8, wherein more than 30 wt.-% or at least 50 wt.-% or at least 70 wt.-% of the added recycled concrete paste and/or recycled concrete fines is/are converted into clinker phases.

10. Method according to anyone of claims 1 to 9, wherein a calcium sulfate source is added to the cooler together with or downstream of the recycled concrete paste and/or recycled concrete fines.
